# EUROPEAN PATENT APPLICATION

(11) **EP 2 209 315 A1**
(43) Date of publication of application: **21.07.2010**
(21) Application number: 10150898.4
(22) Date of filing: 15.01.2010
(51) Int. Cl.: H04N 7/18

(54) **A method and system for surveillance of freight**

(30) Priority: 16.01.2009 ZA 200900047
(71) Applicant: Genr8 Real Time Video Surveillance Solutions, Brooklyn Pretoria 0181 (ZA)
(72) Inventor: Pansegrouw, Johann Ulrich, 0181, Pretoria (ZA)
(74) Representative: Pisani, Diana Jean

(57) **Abstract**

The invention relates to a method (200, 300) and system (100) for surveillance of freight and to a freight vehicle (102). The method (200) includes recording (202), by means of at least one camera (104) installed in or on a freight vehicle (102), footage of the freight (106) being transported by the freight vehicle (102). The method (200) further includes transmitting (206) the recorded footage to a remote location to facilitate surveillance of the freight (106).

## Description

### FIELD OF INVENTION

This invention relates generally to surveillance and more specifically to a method and system for surveillance of freight.

### BACKGROUND OF INVENTION

The Inventor has noted that freight can become damaged during transportation. It can be difficult to determine the chain of events which led to the damage and accordingly who is responsible for the damage.

The Inventor desires a method and system which overcomes or at least alleviates this drawback.

### SUMMARY OF INVENTION

According to one aspect of the invention, there is provided a method of surveillance of freight, the method including:
recording, by means of at least one camera installed in or on a freight vehicle, images or video of the freight being transported by the freight vehicle; and
transmitting the recorded images or video to a remote location to facilitate surveillance of the freight.

The term "freight vehicle" may include a land vehicle, an air vehicle and a sea vehicle, and specifically includes a freight or cargo ship.

The method may include a prior step of installing the camera in or on the freight vehicle. More specifically, a plurality of cameras may be installed throughout the freight vehicle, thereby to monitor a plurality of different areas, such as cargo holds, of the vehicle. The method may therefore include recording images or video (further referred to collectively as footage) of freight from a plurality of cameras. Footage from a specific camera may be selectively viewable, thus allowing a user to select which freight is viewed and/or from which angle it is viewed.

Images or video may be transmitted via a wireless connection. For example, the footage may be transmitted by means of a satellite link or other wireless telecommunications network.

The transmission of the footage may be in real-time. Thus, a user may be able to view the footage in real-time or near real-time to provide a visual indication of the condition of the freight at that moment. Alternatively, and especially in regions where the wireless telecommunications network is not reliably and continually available, the transmission may be intermittent, either at predefined intervals or when the wireless telecommunications network becomes available.

The method may include generating a log of recorded footage and optionally transmitting the log together with the footage. The method may further include determining a geographic location of the vehicle, for example through use of a Global Positioning System (GPS), when the footage was recorded and including an indication of the geographic location in the log.

The footage may be in high-definition format. The footage may additionally include an audio component, in which case the method may include recording audiovisual footage.

The method may be operable automatically without human intervention. Alternatively, the method may require a user input to authorise one or more of the steps, such as the transmitting of the recorded footage.

The cameras may be remotely controllable.

The remote location may be a remote computer server. In such case, the method may include making the footage available via the computer server. In one embodiment, the computer server includes a web server and the footage may thus be viewable by means of a web browser across the Internet. The method may include authenticating a user, to determine whether or not the user is authorised to view the footage and which footage the user is authorised to view. The computer server may also be operable to permit viewing of the log of recorded footage, if present.

The method may include saving the footage on a portable machine-readable medium, such as a CD or DVD or memory stick, and providing the medium, optionally together with the freight, to the user.

The invention extends to a machine-readable medium having stored thereon a set of instructions which, when executed by a machine, causes the machine to perform a method as defined above.

The invention extends further to a system for surveillance of freight, the system including:
at least one camera installed in or on a freight vehicle, the camera being operable to record footage of the freight being transported by the freight vehicle; and
a communication arrangement operatively connected to the camera, the communication arrangement being operable to transmit the recorded footage to a remote location.

The system may include a plurality of cameras. The cameras may be directed towards different freight areas of the vehicle and/or may be directed to the same freight area but at different angles.

The communication arrangement may include a satellite transmitter to transmit the footage to the remote location. This may find particular application where the freight vehicle is, for example, a cargo ship where often a ground-based telecommunications network is not available. Alternatively, or in addition, the communication arrangement may include a GSM modem, for example if the freight vehicle is a road-going vehicle which may at least some of the time be in range of a GSM telecommunications network.

The system may include a GPS module which is operable to determine a current geographical location of the freight vehicle.

The system may include a remote computer server in communication with the communication arrangement. The remote computer server may be operable to host a web browser via which the footage is accessible.

The invention extends still further to a freight vehicle including a system for surveillance as defined above.

### BRIEF DESCRIPTION OF DRAWINGS

The invention will now be further described, by way of example, with reference to the accompanying diagrammatic drawings.

### In the drawings:

Figure 1 is a schematic view of a system for surveillance, in accordance with the invention;
Figure 2 is a flow diagram of a method of surveillance, in accordance with the invention; and
Figure 3 is a schematic view of a machine in the example form of a computer system within which a set of instructions, for causing the machine to perform any one or more of the methodologies discussed herein, may be executed.

### DETAILED DESCRIPTION OF PREFERRED EMBODIMENT

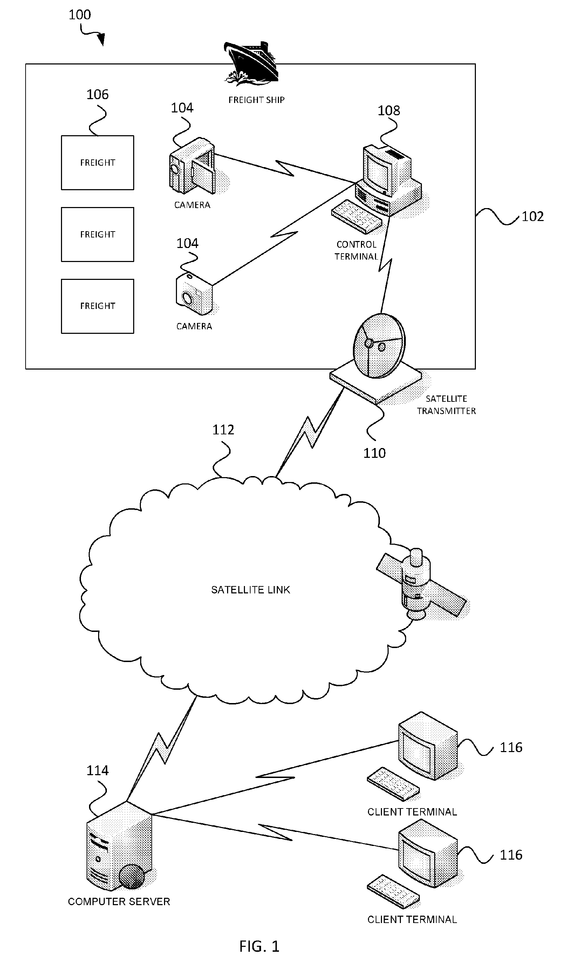

Referring to Figure 1, reference numeral 100 generally indicates a system for surveillance in accordance with the invention. This example is described with reference to a sea-going freight or cargo ship 102, but it is to be appreciated that the system 100 may be applicable to other vehicles (e.g. trucks or planes) and is not necessarily limited to ships.

The ship 102 includes a plurality of cameras 104 mounted thereto and directed towards an area intended for carrying freight 106, i.e. cargo holds. If the freight 106 is particularly important, there may be a plurality of cameras 104 directed at different angles towards a single item of freight 106. The cameras 104 are in communication with a control terminal 108, e.g. in the form of a computer. The control terminal 108 is configured to regulate the portion of the system 100 located on the ship 102. For example, the cameras 104 can be connected to the control terminal 108 wirelessly or by means of wires or cables.

The cameras 104 are operable to capture video and/or images (i.e. footage) which optionally may include audio.

The control terminal 108 includes, or is connected to, a communication arrangement in the form of a satellite transmitter 110. It is to be understood that the ship 102 may spend large amounts of time at sea where it is out of range of most or all terrestrial telecommunications networks and a satellite link may be a viable, or the only viable, option. In some cases, where no telecommunications network is available, the control terminal 108 may be operable to store the footage and transmit it when a telecommunications network becomes available.

A telecommunications network may include many communication components, and in this example at least includes a satellite link 112, but may also include the Internet or a GSM network, etc.

Also connected (directly or indirectly) to the satellite link 112 is a computer server 114 at a remote location from the ship 102. The computer server 114 hosts a web server which is operable to make content accessible via a telecommunications network (e.g. the Internet) to a plurality of client terminals 116. The client terminals 116 are operable to access data (e.g. footage) stored on the computer server 114. To this end, the computer server may include a footage database on which is stored a plurality of freight footage.

The computer server 114 may be configured to authenticate a user to ensure that only authorised users are permitted to access footage.

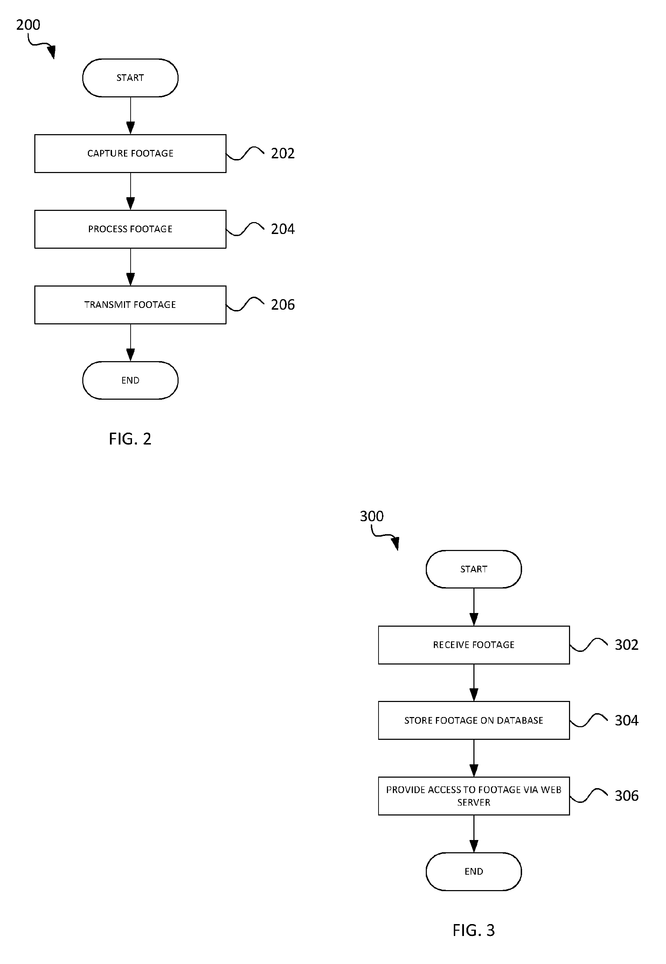

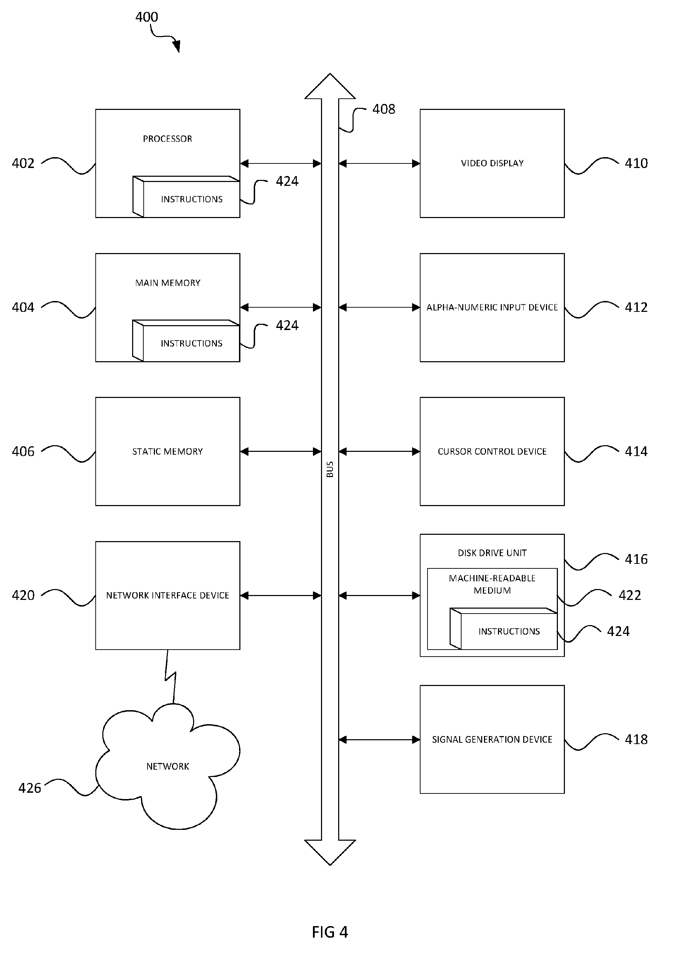

The invention will further be described with reference to a specific example and with reference to Figure 2 and Figure 3. Figure 2 and Figure 3 illustrate respective methods 200, 300 of surveillance in accordance with the invention. It will be appreciated however that the methods 200, 300 may be implemented by a different system and that the system 100 may be configured to implement different methods. The method 200 is performed by the ship 102 while the method 300 is performed by the computer server 114.

The cameras 104 are installed for use in the ship 102 and directed at freight 106 in the cargo hold. The cameras 104 record or capture, at block 202, footage of the freight 106. For instance, if the freight 106 is damaged or is in the process of being damaged, the footage will provide a record of the damage-causing events for later review and damage assessment. The footage may also include loading and unloading of the freight 106.

The control terminal 108 receives the footage from the cameras 104 and processes, at block 204, the footage. Processing may include logging and/or forwarding the footage. If the satellite link 112 is available, the control terminal 108 forwards and transmits, at block 206, via the satellite transmitter 110, the footage. Optionally, the control terminal 108 generates a log of the footage. The log may include one or more of: a time and date of when the footage was recorded, a GPS location of the ship 102 at the time the footage was recorded, telemetry of the ship 102 (e.g. impact/tilt/roll meter readings), weather conditions, and any other appropriate factors.

Thus, the footage (together with the log, if present) is transmitted from the ship 102 in real-time.

Alternatively, the satellite link 112 may not always be available, e.g. when the ship 102 is out of range or when a satellite is unavailable, e.g. due to inclement weather. In such case, the control terminal 108 is able to store the footage, at least temporarily, until such time as the satellite link 112 is available again, at which time the control terminal 108 transmits the footage.

From the perspective of the computer server 114, the footage is received, at block 302, via the satellite link 112. The footage is stored, at block 304, on the footage database for later access and retrieval.

The footage may be categorised, for example associated with a particular ship 102, a particular item of freight 106, a particular time and date, etc. A user or customer who wishes to view footage of freight 106 may log onto the web server via the client terminal 116 having installed thereon a web client or web browser. Typically, the user is required to register beforehand with the computer server 114 and when logging onto the web server, he or she must enter a username and password for authentication. The computer server 112 may associate a particular user with particular footage, so that when that user logs on to the computer server 114, the particular footage is available for viewing.

Specifically, a user enters a username and password and logs onto the computer server 114. Via a web interface presented by the web server, the user is provided, at block 306, with access to footage for viewing which is associated with items of freight 106 owned by the user (the web server thus hosting the footage, at least from the perspective of the client terminal). Thus, the user may view the condition of his or her freight 106 and, if there has been any damage, the user may take appropriate action. In addition, the user may view historical or saved footage, thereby to review any potential problems or occurrences which have already occurred. Further, the log, if present, may be viewed.

Optionally, the computer server 114 may also be able to transmit to the control terminal 108, for example to provide instructions or directions, such as controlling or moving a specific camera 104.

The example computer system 400 includes a processor 402 (e.g., a central processing unit (CPU), a graphics processing unit (GPU), a digital signal processor (DSP), or any combination of these processors), a main memory 404 and a static memory 406, which communicate with each other via a bus 408. The computer system 400 may further include a video display unit 410 (e.g., a liquid crystal display (LCD), a plasma display, or a cathode ray tube (CRT)). The computer system 400 also includes an alphanumeric input device 412 (e.g., a keyboard), a user interface (UI) navigation device 414 (e.g., a mouse), a disk drive unit 416, a signal generation device 418 (e.g., a speaker) and a network interface device 420.

The disk drive unit 416 includes a machine-readable medium 422 on which is stored one or more sets of instructions and data structures (e.g., software 424) embodying or utilised by any one or more of the methodologies or functions described herein. The software 424 may also reside, completely or at least partially, within the main memory 404 and/or within the processor 402 during execution thereof by the computer system 400, the main memory 404 and the processor 402 also constituting machine-readable media.

The software 424 may further be transmitted or received over a network 426 via the network interface device 420 utilising any one of a number of well-known transfer protocols (e.g., HTTP).

While the machine-readable medium 422 is shown in an example embodiment to be a single medium, the term "machine-readable medium" should be taken to include a single medium or multiple media (e.g., a centralised or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present embodiments, or that is capable of storing, encoding or carrying data structures utilised by or associated with such a set of instructions. The term "machine-readable medium" shall accordingly be taken to include, but not be limited to, solid-state memories, optical and magnetic media, and carrier wave signals.

One or more components, such as the control terminal 108 and/or the computer server 114, may be in the form of, or may at least include some of the components of, the computer system 400.

The Inventor believes that the invention as exemplified provides a convenient and effective system 100 and method 200, 300 for surveillance of freight 106 during transportation thereof. Importantly, if the freight is damaged or tampered with, by reviewing the footage, the user can determine the exact nature and cause of the damage. Further, the footage can be viewed by a single or multiple users in real-time, so that the user(s) can be provided with a current indication of the condition of the freight 106 and/or historical recorded footage can be viewed, so that the user(s) can review loading, carriage and unloading of the freight 106. A further advantage of the invention is that it allows a remote user to communicate with on-site personnel on the freight ship 102 to provide such personnel with immediate feedback and/or specific instructions. For example, in the event of an emergency, the user may be required to authorise improvised procedures with regard to the freight 106.

More specifically, the Inventor believes that the invention as exemplified may allow a surveyor and/or other interested person(s) to do the following remotely:
- Asses, monitor and record procedures;
- Gain immediate information required from on-site personnel;
- Monitor quality control;
- Monitor safety procedures and protocol;
- Monitor and record placement of cargo;
- Give instructions to on-site personnel regarding the activities ;
- Record and monitor readings from measuring equipment installed on cargo;
- Record and monitor times at which specific activities/procedures take place;
- Immediate advice/support to on-site personnel;
- Asses damage to cargo immediately;
- Give instruction on emergency or improvised procedures; and/or
- Give immediate feedback to parties of interest.

This may be accomplished by means of:
- Secure website that require the user to log on with an unique username and password to enable viewing of a specific job;
- Website allocates live video feed and voice communications to the user of the requested job; and/or
- Wireless cameras and voice communications on location of the job.

Additional tangible and intangible benefits of the invention may be:
- Immediate feedback;
- Immediate access to any accessible information required;
- Live and recorded coverage of activities;
- Increased awareness of quality and safety procedures on site due to the presence of film crew;
- Early warning during the transportation of cargo regarding any abnormalities, incidents and occurrences, enabling the parties concerned to act while cargo is still en route;
- Credible video material for assistance in establishing cause(s) of any abnormalities, incidents and occurrences;
- Daily feedback from the operator on board enables the user to not only track the position of the cargo, but also immediate weather patterns, any abnormalities, incidents and occurrences en route and changes in arrival dates and delays;
- Immediate, 24 hour communication with the camera operator and transporter through satellite communications;
- Post analyses of footage enables the user to examine specific areas of interest during filming and feedback;
- Increased quality control; and/or
- Video feedback material increases the quality of records used by all parties concerned and improves reference material.

## Claims

1. A method of surveillance of freight, the method including:
recording, by means of at least one camera installed in or on a freight vehicle, footage of the freight being transported by the freight vehicle; and
transmitting the recorded footage to a remote location to facilitate surveillance of the freight.

2. A method as claimed in claim 1, including a prior step of installing the camera in or on the freight vehicle.

3. A method as claimed in claim 1 or claim 2, wherein footage of freight is recorded from a plurality of cameras installed in or on the freight vehicle.

4. A method as claimed in any of the preceding claims, wherein footage is transmitted in real-time via a wireless connection.

5. A method as claimed in any of claims 1 to 3 inclusive, wherein footage is transmitted intermittently via a wireless connection.

6. A method as claimed in any of the preceding claims, including generating a log of recorded footage and transmitting the log together with the footage.

7. A method as claimed in claim 6, which includes determining a geographic location of the vehicle when the footage was recorded and including an indication of the geographic location in the log.

8. A method as claimed in any of the preceding claims, including receiving a user input to authorise transmission of the recorded footage.

9. A method as claimed in any of the preceding claims, wherein the camera is remotely controllable.

10. A method as claimed in any of the preceding claims, including providing a web server which hosts the recorded footage, the web server being accessible by a remote web client thereby to view the footage remotely from the web server.

11. A method as claimed in claim 10, including authenticating a user, to determine whether or not the user is authorised to view the footage and, if so, which footage the user is authorised to view.

12. A machine-readable medium having stored thereon a set of instructions which, when executed by a machine, causes the machine to perform a method as claimed in any of the preceding claims.

13. A system for surveillance of freight, the system including:
at least one camera installed in or on a freight vehicle, the camera being operable to record footage of the freight being transported by the freight vehicle; and
a communication arrangement operatively connected to the camera, the communication arrangement being operable to transmit the recorded footage to a remote location.

14. A system as claimed in claim 13, including a plurality of cameras which are directed towards the same or different freight areas of the vehicle at different angles.

15. A system as claimed in claim 13 or claim 14, wherein the communication arrangement includes a satellite transmitter to transmit the footage to the remote location.

16. A system as claimed in any of claims 13 to 15 inclusive, including a remote computer server in communication with the communication arrangement, wherein the remote computer server is operable to host a web server via which the footage is accessible.

17. A freight vehicle including a system for surveillance as claimed in any of claims 13 to 16 inclusive.
